# EUROPÄISCHE PATENTSCHRIFT

(11) **EP 0 185 893 B1**
(45) Veröffentlichungstag und Bekanntmachung des Hinweises auf die Patenterteilung: **16.04.1997**
(21) Anmeldenummer: 85113820.6
(22) Anmeldetag: 30.10.1985
(51) Int. Cl.: C09D 183/04, C09D 5/08

(54) **Lack und Verfahren zur Herstellung von Korrosionsschutzbeschichtungen**
Lacquer and process for making anticorrosive coatings
Laque et procédé de fabrication de revêtements anticorrosifs

(30) Priorität: 31.10.1984 DE 3439880
(43) Veröffentlichungstag der Anmeldung: 02.07.1986
(73) Patentinhaber: FRAUNHOFER-GESELLSCHAFT ZUR FÖRDERUNG DER ANGEWANDTEN FORSCHUNG E.V., 80636 München (DE)
(72) Erfinder: Schmidt, Helmut, D-8706 Höchberg (DE); Patzelt, Helmut, D-8702 Kist (DE); Tünker, Gerhard, D-8700 Würzburg (DE); Scholze, Horst, D-8700 Würzburg (DE)
(74) Vertreter: Barz, Peter, Dr.

(56) Entgegenhaltungen:
- DE-A- 2 555 367
- DE-A- 2 755 283
- FR-A- 1 411 160
- FR-A- 1 489 600
- FR-A- 2 413 415
- Kirk-Othmer Encyclopedia chem.Technology (1984) Supplement Vol. Seiten 437-438
- Ullmann's Enzyklopädie der techn. Chemie (1978), Bd. 15, Seiten 641-643, 670-674 und Bd. 18, Seite 658

## Beschreibung

Die Erfindung betrifft einen transparenten Lack auf der Grundlage von organisch modifizierten Silicaten und dessen Verwendung zur Herstellung von transparenten Korrosionsschutzbeschichtungen auf Glasoberflächen.

Korrosionsschutzbeschichtungen für Glas oder Glasoberflächen müssen speziellen Anforderungen genügen. Neben der geforderten Sperrwirkung für korrosive Medien, wie Wasserdampf oder SO₂-haltige Gase,tritt bei Glasoberflächen das besondere Problem auf, eine feuchtigkeitsbeständige Substrathaftung der Korrosionsschutzbeschichtung zu erzielen. Die Haftung auf Glas lässt sich zwar dadurch verbessern, dass man das zu beschichtende Substrat speziellen Vorbehandlungen unterwirft, z.B. mit organischen Lösungsmitteln oder sauren Gasen, jedoch sind diese Methoden beispielsweise bei der Korrosionsschutzbeschichtung von Glas-Kunstwerken, wie etwa mittelalterlichen Kirchenfenstern, nicht anwendbar.

Kirk-Othmer, Encyclopedia of Chemical Technology, Third Edition, Supplement Volume (1984), Seiten 437-438, betrifft die Konservierung von alten Glasoberflächen und schlägt eine Beschichtung mit Acrylharz vor, um einer Absplitterung von Glaszerfallsprodukten (Verwitterung) entgegenzuwirken.

DE-A-2758414 (entsprechend FR-A-2413415) beschreibt Kieselsäureheteropolykondensate, die den erfindungsgemäß eingesetzten, in den vorliegenden Ansprüchen 1 und 10 definierten Lackkomponenten entsprechen. Außerdem beschreibt dieses Dokument, daß diese Kieselsäureheteropolykondensate als fest haftende Beschichtungen auf Gläsern, wie Roux-Flaschen, hervorragend als Unterlagen zur Züchtung von Gewebe- und Zellkulturen geeignet sind.

Ullmann's Enzyklopädie der technischen Chemie, Band 15, Seiten 641 bis 643 und 670 bis 674, offenbart, daß Siliconharz-Lacke zur Herstellung wetterfester Beschichtungen geeignet sind. Interessante Anwendungsgebiete für derartige Lacke sind u.a. die Beschichtung von Fassaden-Verkleidungsflächen und Verkehrsschildern. Außerdem wird offenbart, daß durch den Einsatz von schuppenförmigen Füllstoffen (wie Glimmern) im allgemeinen die Korrosionsschutzwirkung von Lacken verbessert werden kann (siehe auch ibid., Band 18, S. 658, Punkt 5.3).

FR-A-1489600 beschreibt den Einsatz von Glasflocken, die mit einem oberflächenaktiven Mittel wie Stearinsäure oder Siliconöl vorbehandelt sind, als Fülllstoff für rein organische Lacksysteme zur Verbesserung ihrer Korrosionsschutzwirkung. Die Beschichtung von Glas wird in diesem Dokument nicht erwähnt.

Ziel der Erfindung ist es, einen transparenten Lack und ein Verfahren zur Herstellung von transparenten Korrosionschutzbeschichtungen auf Glasoberflächen bereitzustellen, die ausgezeichnete Substrathaftung auch unter feuchten Bedingungen zeigen und insbesondere zum Schutz chemisch unbeständiger Gläser ohne besondere Vorbehandlung geeignet sind.

Der erfindungsgemäße transparente Korrosionsschutzlack enthält
1) ein Kieselsäureheteropolykondensat, das hergestellt worden ist durch Hydrolyse und Polykondensation von
   a) mindestens einem Organosilan der allgemeinen Formel I

      RₘSiX₄₋ₘ (I)

      in der R Alkyl, Alkenyl, Aryl, Aralkyl, Alkylaryl, Arylalkenyl oder Alkenylaryl bedeutet, X Wasserstoff, Halogen, Hydroxy, Alkoxy, Acyloxy oder die Gruppe -NR'₂ (R' = Wasserstoff und/oder Alkyl) darstellt und m den Wert 1, 2 oder 3 hat,
      und mindestens einer der folgenden Komponenten (b), (c) und (d):
   b) ein oder mehrere siliciumfunktionelle Silane der allgemeinen Formel II

      SiX₄ (II)

      in der X die vorstehende Bedeutung hat, jedoch nicht alle Reste X Wasserstoff sind;
   c) ein oder mehrere, im Reaktionsmedium lösliche, schwerflüchtige Oxide eines Elementes der Hauptgruppen Ia bis Va oder der Nebengruppen IIb bis Vb des Periodensystems oder ein oder mehrere ein derartiges schwerflüchtiges Oxid bildende Verbindungen dieser Elemente;
   d) ein oder mehrere organofunktionelle Silane der allgemeinen Formel III

      Rₙ(R"Y)ₚSiX₍₄₋ₙ₋ₚ₎ (III)

      in der R und X die vorstehende Bedeutung haben, R" Alkylen, Arylen, Alkylenarylen, Alkenylen oder Alkenylenarylen darstellt, wobei diese Reste durch Sauerstoff- oder Schwefelatome oder -NH-Gruppen unterbrochen sein können, Y Halogen oder eine gegebenenfalls substituierte Aminogruppe, Amid-, Aldehyd-, Alkylcarbonyl-, Carboxy-, Hydroxy-, Mercapto-, Cyano-, Alkoxy-, Alkoxycarbonyl-, Sulfonsäure-, Phosphorsäure-, Acryloxy-, Methacryloxy-, Glycidyloxy-, Epoxy- oder Vinylgruppe ist, n den Wert 0, 1 oder 2 und p den Wert 1, 2 oder 3 haben, wobei n + p den Wert 1, 2 oder 3 hat;
   wobei im Falle der Ausgangskomponenten (a) und (d) auch im Reaktionsmedium lösliche Oligomere dieser Silane verwendet werden können;
2) einen schuppen- oder blättchenförmigen Füllstoff und
3) ein Lösungsmittel für das Kieselsäureheteropolykondensat und
4) gegebenenfalls ein übliches Lackkunstharz.

Vorzugsweise enthält das Kieselsäureheteropolykondensat 20 bis 95 Molprozent des Organosilans (a), 0 bis 20 Molprozent des siliciumfunktionellen Silans (b), 0 bis 20 Molprozent der Oxidkomponente (c) und 0 bis 60 Molprozent des organofunktionellen Silans (d), wobei der Gesamtanteil der Komponenten (b), (c) und/oder (d) mindestens 5 Molprozent beträgt.

Die Erfindung betrifft ferner ein Verfahren zur Herstellung von transparenten Korrosionsschutzbeschichtungen auf Glasoberflächen, bei dem man den oben beschriebenen Lack auf die zu schützende Oberfläche aufbringt und trocknet.

Ein wesentlicher Bestandteil des erfindungsgemäßen Korrosionsschutzlackes ist ein Kieselsäureheteropolykondensat, wie es z.B. in den DE-A-27 58 414 und 30 11 761 beschrieben ist. Dort sind auch spezielle Ausführungsformen und Verfahren zur Herstellung des Kieselsäureheteropolykondensats angegeben.

Überzüge aus diesen bekannten Kieselsäureheteropolykondensaten eignen sich jedoch nicht als Korrosionsschutzbeschichtungen, da sie wasserdampfdurchlässig sind und sowohl auf metallischen als auf nicht-metallischen Substraten keine korrosionshemmende Wirkung zeigen. Auf chemische unbeständigen Gläsern kann sogar das Gegenteil eintreten, da sich aufgrund des verhinderten Abtransports Korrosionsprodukte an der Grenzfläche anreichern, die die Korrosion beschleunigen.

Überraschenderweise wurde nun gefunden, dass durch Einlagerung bestimmter Füllstoffe eine deutlich verbesserte Sperrwirkung erzielt werden kann. Diese Füllstoffe liegen in Form dünner Schuppen oder Blättchen vor, die sich durch geeignete Auftragstechniken parallel anordnen lassen und dann als Diffusionssperrschicht wirken. Durch die gegenseitig überlappende Berührung der schuppen- oder blättchenförmigen Füllstoffe wird die Ausbildung von Diffusionskanälen für Wasserdampf und andere Schadstoffe verhindert.

Als schuppen- oder blättchenförmige Füllstoffe sind anorganische Materialien bevorzugt und transparente Materialien besonders bevorzugt. Spezielle Beispiele sind Glasblättchen, z.B. Glas -Flakes mit einer Dicke von 3 bis 4 µm und einer Durchmesser von 0,4 bis 3,2 mm (Flake-Glass C von Corning) oder aus Duranglas -Folien hergestellte Blättchen mit einer Dicke von 3 bis 10 µm, sowie Glimmerblättchen, z.B. sogenannter Feinglimmer (Merck) mit einer Dicke von 0,4 µm und einem Durchmesser von weniger als 15 µm oder grössere Glimmersorten mit Durchmessern bis 100 µm oder mehr.

Aus dem erfindungsgemäßen Lacksystem hergestellte Korrosionsschutzbeschichtungen zeichnen sich durch hervorragende feuchtigkeitsbeständige Haftung des Bindemittels (Kieselsäureheteropolykondensat) sowohl zum Füllstoff als auch zur Glasoberfläche aus. Durch geeignete Wahl der Zusammensetzung des Kieselsäureheteropolykondensats lassen sich die Brechwerte von Bindemittel und Füllstoff so aufeinander abstimmen, dass der Füllstoff nicht in Erscheinung tritt und die Beschichtung transparent ist. Auf diese Weise ist es erstmals gelungen, ein brauchbares Korrosionsschutzsystem für chemisch unbeständige Gläser, z.B. mittelalterliche Glaskunstwerke bereitzustellen.

Als weitere Bindemittelkomponente neben dem Kieselsäureheteropolykondensat kann der erfindungsgemäße Korrosionsschutzlack gegebenenfalls ein übliches Lackkunstharz enthalten, z.B. ein Polyacrylat, Polymethacrylat, Polyamid, Polyvinylchlorid, Poly(ethylen-vinylacetat), Phenolharz oder Cellulosederivat. Der Anteil dieses Lackkunstharzes an der Gesamt-Bindemittelkomponente (Kieselsäureheteropolykondensat plus Lackkunstharz) beträgt vorzugsweise höchstens 50 Gewichtsprozent.

Als Lösungsmittel können in dem erfindungsgemäßen Korrosionsschutzlack alle in der Lacktechnik üblicherweise eingesetzten Lösungsmittel angewandt werden. Spezielle Beispiele sind aromatische Kohlenwasserstoffe, wie Toluol, Ester, wie Ethylacetat und Butylacetat, Ketone, wie Aceton, Alkohole, wie Methanol oder n-Butanol, sowie Mischungen dieser Lösungsmittel. Neben den bereits genannten Komponenten kann der erfindungsgemäße Korrosionsschutzlack gegebenenfalls andere übliche Lackadditive in üblichen Zusatzmengen enthalten, z.B. Verlaufmittel.

Das Gewichtsverhältnis der Bindemittelkomponenten (Kieselsäureheteropolykondensat und gegebenenfalls Lackkunstharz) zum Lösungsmittel beträgt vorzugsweise 1:1 bis 1:20. Das Gewichtsverhältnis der Bindemittelkomponenten zum Füllstoff beträgt vorzugsweise 3:7 bis 5:1.

Zur Herstellung von Korrosionsschutzbeschichtungen auf Glasoberflächen wird das erfindungsgemäße Lacksystem auf die zu schützende Oberfläche aufgebracht und getrocknet. Obwohl beliebige Auftragstechniken angewandt werden können, haben sich im Hinblick auf die Erzielung der gewünschten Diffusionssperrschicht (planparallele Anordnung und Ausrichtung der Füllstoffteilchen) zwei Methoden als besonders vorteilhaft erwiesen.

Bei der einen Beschichtungsmethode sprüht man den füllstoffhaltigen Lack mit einer herkömmlichen Sprühpistole in mehreren Schichten (z.B. drei- oder viermal) auf die zu schützende Oberfläche, wobei zwischen den einzelnen Sprühbeschichtungen eine Zwischentrocknung durchgeführt wird. Durch das dabei erfolgende wiederholte Anlösen der Schichten und Eintrocknen findet eine Reorganisation des Beschichtungsgefüges statt und es kommt zu einer zunehmend paralleleren Anordnung der Füllstoffblättchen. Das Gewichtsverhältnis der Bindemittelkomponenten zum Lösungsmittel beträgt beim Versprühen des Lackes vorzugsweise 1:1 bis 1:6, während das Gewichtsverhältnis der Bindemittelkomponenten zum Füllstoff vorzugsweise 1:1 bis 2:1 beträgt. Das Sprühverfahren eignet sich eher für schuppen- oder blättchenförmige Füllstoffe mit kleinerem Durchmesser (≦ 100 µm); besonders gute Ergebnisse werden mit Feinglimmer erzielt.

Universeller anwendbar (d.h. auch für grössere Füllstoffdurchmesser) ist die andere Beschichtungsmethode, bei der man zunächst den füllstoffreien Lack auf die zu schützende Oberfläche aufbringt, vor dem Klebfreitrocknen der Lackschicht den Füllstoff aufstreut oder die Lackschicht mit einem Füllstoffbett in Berührung bringt, den an der Lackschicht anhaftenden Füllstoff andrückt und dieses Verfahren gegebenenfalls ein- oder mehrmals wiederholt. Der füllstofffreie Lack weist in diesem Fall ein Gewichtsverhältnis von Bindemittelkomponenten zu Lösungsmittel von vorzugsweise 1:10 bis 1:20 auf.

Bei dieser Beschichtungsmethode, jedoch auch bei der erstgenannten Methode, können anschliessend noch eine oder mehrere Deckschichten aus dem füllstoffreien Lack aufgebracht (z.B. aufgesprüht) werden, der für diesen Zweck ein Gewichtsverhältnis von Bindemittelkomponenten zu Lösungsmittel von vorzugsweise 1:1 bis 1:10 aufweist.

Die Härtung der Beschichtung kann auf thermischem Wege erfolgen. In einer speziellen Ausführungsform wird die Härtung der Bindemittelkomponente durch Zumischen eines Titan- oder Zirkonesters zu dem Lacksystem vor dessen Auftrag auf die zu beschichtende Oberfläche gefördert. Diese Titan- oder Zirkonester haben z.B. die allgemeine Formel IV

M(OR"')₄

in der M Titan oder Zirkon bedeutet und R"' ein geradkettiger oder verzweigter Alkylrest mit 1 bis 6 Kohlenstoffatomen ist. Die verwendete Menge an Titan- oder Zirkonester beträgt vorzugsweise 1 bis 20 Gewichtsprozent, bezogen auf das Kieselsäureheteropolykondensat.

Erfindungsgemäß können Gläser oder Glasoberflächen mit einer transparenten Korrosionsschutzbeschichtung versehen werden.

Die folgenden Beispiele erläutern die Erfindung.

### Beispiel 1

Ein dem Brechwert des zu beschichtenden Glases angepasstes Lacksystem wird dadurch hergestellt, dass man ein Kieselsäureheteropolykondensat aus 62,5 Molprozent Diphenylsilan 32,5 Molprozent Methylvinylsilan und 5 Molprozent Tetraethoxysilan mit Poly(methylmethacrylat) im Gewichtsverhältnis 7:3 mischt und die erhaltene Bindemittelkomponente in Ethylacetat in einem Gewichtsverhältnis von 1:4 löst. Hierauf mischt man Feinglimmer in einem Gewichtsverhältnis von Bindemittelkomponente zu Glimmer von 1:1 zu und homogenisiert 1 bis 3 Stunden mit einem Rührer.

Der erhaltene Lack wird in eine Sprühpistole eingefüllt und auf die senkrecht stehende Glasoberfläche gesprüht. Durch drei- bis viermaliges Übersprühen wird eine lückenlose Beschichtung erhalten. Zwischen den einzelnen Sprühbeschichtungen erfolgt eine Zwischentrocknung, bis die Oberfläche nicht mehr klebt (5 bis 10 Minuten). Die Dicke der Lackschichten beträgt je nach Schichtauftrag 8 bis 10 µm; die Gesamt-Schichtdicke liegt im Bereich von 30 bis 40 µm.

Nach dem letzten Auftrag des Feinglimmerlackes und Trocknen wird eine glimmerfreie verdünnte Lacklösung (Verdünnung 1:4 bis 1:10) auf das eben liegende Substrat aufgesprüht, worauf man 18 bis 24 Stunden bei Raumtemperatur trocknet. Der dabei erzielt Lackauftrag beträgt 20 bis 30 µm.

Anschliessend erfolgen noch zwei Überlackierungen mit glimmerfreien Verdünnungen von 1:4 bis 1:5, zwischen denen 18 bis 24 Stunden getrocknet wird. Nach der abschliessenden, drei Tage dauernden Trocknung werden in Abhängigkeit von dem Auftrag des Überlackes Schichtdicken von 50 bis 100 µm gemessen.

### Beispiel 2

Zur Herstellung eines auf den Brechwert der zu beschichtenden Glasoberfläche angepassten Lacksystems wird das in Beispiel 1 verwendete Kieselsäureheteropolykondensat mit Poly-(metfiylmethacrylat) im Gewichtsverhältnis 1:1 abgemischt und mit Ethylacetat im Gewichtsverhältnis 1:10 bis 1:20 verdünnt. Beim Auftrag dieses Lacksystems auf die zu beschichtende Oberfläche werden Schichtdicken von 10 µm erzielt.

Vor dem Antrocknen des Lackes werden Glas-Flakes von 0,4 mm Durchmesser auf die Lackschicht aufgestreut und angedrückt oder aber man verteilt die Glas-Flakes auf einer geeigneten Folie (z.B. Hostaflon) und drückt das lackierte Substrat auf das Glasblättchenbett. Auf diese Weise werden bis zu drei Lagen Glas-Flakes aufgebracht.

Die Schicht wir mit füllstoffreiem Lack (Verdünnung 1:20) benetzt und erneut mit Glas-Flakes bestreut. Insgesamt werden drei Behandlungen dieser Art durchgeführt, wobei bis zu zehn Glas-Flake-Lagen erhalten werden.

Nach dreistündiger Trocknung erfolgt eine Überlackierung mit einem im Brechwert angepassten füllstoffreien Lack (Verdünnung 1:1), worauf nochmals mindestens 1 Tag getrocknet wird.

## Patentansprüche

1. Verfahren zur Herstellung von transparenten Korrosionsschutzbeschichtungen auf Glasoberflächen, bei dem man einen Lack auf die zu schützende Oberfläche aufbringt und trocknet, wobei der Lack enthält:
1) ein Kieselsäureheteropolykondensat, das hergestellt worden ist durch Hydrolyse und Polykondensation von
a) mindestens einem Organosilan der allgemeinen Formel I
RₘSiX₄₋ₘ (I)
in der R Alkyl, Alkenyl, Aryl, Aralkyl, Alkylaryl, Arylalkenyl oder Alkenylaryl bedeutet, X Wasserstoff, Halogen, Hydroxy, Alkoxy, Acyloxy oder die Gruppe -NR'₂ (R' = Wasserstoff und/oder Alkyl) darstellt und m den Wert 1, 2 oder 3 hat,
und mindestens einer der folgenden Komponenten (b), (c) und (d):
b) ein oder mehrere siliciumfunktionelle Silane der allgemeinen Formel II
SiX₄ (II)
in der X die vorstehende Bedeutung hat, jedoch nicht alle Reste X Wasserstoff sind;
c) ein oder mehrere, im Reaktionsmedium lösliche, schwerflüchtige Oxide eines Elements der Hauptgruppen Ia bis Va oder der Nebengruppen IIb bis Vb des Periodensystems oder ein oder mehrere ein derartiges schwerflüchtiges Oxid bildende Verbindungen dieser Elemente;
d) ein oder mehrere organofunktionelle Silane der allgemeinen Formel III
Rₙ(R"Y)ₚSiX₍₄₋ₙ₋ₚ₎ (III)
in der R und X die vorstehende Bedeutung haben, R" Alkylen, Arylen, Alkylenarylen, Alkenylen oder Alkenylenarylen darstellt, wobei diese Reste durch Sauerstoff- oder Schwefelatome oder -NH-Gruppen unterbrochen sein können, Y Halogen oder eine gegebenenfalls substituierte Aminogruppe, Amid-, Aldehyd-, Alkylcarbonyl-, Carboxy-, Hydroxy-, Mercapto-, Cyano-, Alkoxy-, Alkoxycarbonyl-, Sulfonsäure-, Phosphorsäure-, Acryloxy-, Methacryloxy-, Glycidyloxy-, Epoxy- oder Vinylgruppe ist, n den Wert 0, 1 oder 2 und p den Wert 1, 2 oder 3 haben, wobei n + p den Wert 1, 2 oder 3 hat;
wobei im Falle der Ausgangskomponenten (a) und (d) auch im Reaktionsmedium lösliche Oligomere dieser Silane verwendet werden können;
2) einen schuppen- oder blättchenförmigen Füllstoff,
3) ein Lösungsmittel für das Kieselsäureheteropolykondensat und
4) gegebenenfalls ein übliches Lackkunstharz.

2. Verfahren nach Anspruch 1, dadurch gekennzeichnet, daß man den Lack in mehreren Schichten auf die zu schützende Oberfläche aufsprüht und zwischen den einzelnen Sprühbeschichtungen eine Zwischentrocknung durchführt.

3. Verfahren nach Anspruch 1, dadurch gekennzeichnet, daß man den füllstoffreien Lack auf die zu schützende Oberfläche aufbringt, vor dem Antrocknen der Lackschicht den Füllstoff aufstreut oder die Lackschicht mit einem Füllstoffbett in Berührung bringt, den an der Lackschicht anhaftenden Füllstoff andrückt und dieses Verfahren gegebenenfalls ein- oder mehrmals wiederholt.

4. Verfahren nach einem der Ansprüche 1 bis 3, dadurch gekennzeichnet, daß man dem Lack vor dem Aufbringen einen Titan- oder Zirkonester der allgemeinen Formel IV
M(OR"')₄ (IV)
zumischt, in der M Titan oder Zirkon bedeutet und R"' ein geradkettiger oder verzweigter Alkylrest mit 1 bis 6 Kohlenstoffatomen ist.

5. Verfahren nach einem der Ansprüche 1 bis 4, dadurch gekennzeichnet, daß man die lackierte Oberfläche mit einer oder mehreren Deckschichten aus dem füllstoffreien Lack versieht.

6. Verfahren nach einem der Ansprüche 1 bis 5, dadurch gekennzeichnet, daß das Kieselsäureheteropolykondensat 20 bis 95 Molprozent des Organosilans (a), 0 bis 20 Molprozent des siliciumfunktionellen Silans (b), 0 bis 20 Molprozent der Oxidkomponente (c) und 0 bis 60 Molprozent des organofunktionellen Silans (d) umfaßt, wobei der Gesamtanteil der Komponenten (b), (c) und/oder (d) mindestens 5 Molprozent beträgt.

7. Verfahren nach einem der Ansprüche 1 bis 6, dadurch gekennzeichnet, daß der Füllstoff Glimmer oder Glasblättchen (Glas-Flakes) umfaßt.

8. Verfahren nach einem der Ansprüche 1 bis 7, dadurch gekennzeichnet, daß das Gewichtsverhältnis der Harzbestandteile (Kieselsäureheteropolykondensat, Lackkunstharz) zu Lösungsmittel 1:1 bis 1:20 beträgt.

9. Verfahren nach einem der Ansprüche 1 bis 8, dadurch gekennzeichnet, daß das Gewichtsverhältnis der Harzbestandteile (Kieselsäureheteropolykondensat, Lackkunstharz) zu Füllstoff 3:7 bis 5:1 beträgt.

10. Transparenter Lack zur Durchführung des Verfahrens nach Anspruch 1, enthaltend
1) ein Kieselsäureheteropolykondensat, das hergestellt worden ist durch Hydrolyse und Polykondensation von
a) mindestens einem Organosilan der allgemeinen Formel I
RₘSiX₄₋ₘ (I)
in der R Alkyl, Alkenyl, Aryl, Aralkyl, Alkylaryl, Arylalkenyl oder Alkenylaryl bedeutet, X Wasserstoff, Halogen, Hydroxy, Alkoxy, Acyloxy oder die Gruppe -NR'₂ (R' = Wasserstoff und/oder Alkyl) darstellt und m den Wert 1, 2 oder 3 hat,
und mindestens einer der folgenden Komponenten (b), (c) und (d) :
b) ein oder mehrere siliciumfunktionelle Silane der allgemeinen Formel II
SiX₄ (II)
in der X die vorstehende Bedeutung hat, jedoch nicht alle Reste X Wasserstoff sind;
c) ein oder mehrere, im Reaktionsmedium lösliche, schwerflüchtige Oxide eines Elements der Hauptgruppen Ia bis Va oder der Nebengruppen IIb bis Vb des Periodensystems oder ein oder mehrere ein derartiges schwerflüchtiges Oxid bildende Verbindungen dieser Elemente;
d) ein oder mehrere organofunktionelle Silane der allgemeinen Formel III
Rₙ(R"Y)ₚSiX₍₄₋ₙ₋ₚ₎ (III)
in der R und X die vorstehende Bedeutung haben, R" Alkylen, Arylen, Alkylenarylen, Alkenylen oder Alkenylenarylen darstellt, wobei diese Reste durch Sauerstoff- oder Schwefelatome oder -NH-Gruppen unterbrochen sein können, Y Halogen oder eine gegebenenfalls substituierte Aminogruppe, Amid-, Aldehyd-, Alkylcarbonyl-, Carboxy-, Hydroxy-, Mercapto-, Cyano-, Alkoxy-, Alkoxycarbonyl-, Sulfonsäure-, Phosphorsäure-, Acryloxy-, Methacryloxy-, Glycidyloxy-, Epoxy- oder Vinylgruppe ist, n den Wert 0, 1 oder 2 und p den Wert 1, 2 oder 3 haben, wobei n + p den Wert 1, 2 oder 3 hat;
wobei im Falle der Ausgangskomponenten (a) und (d) auch im Reaktionsmedium lösliche Oligomere dieser Silane verwendet werden können;
2) einen schuppen- oder blättchenförmigen Füllstoff,
3) ein Lösungsmittel für das Kieselsäureheteropolykondensat und
4) gegebenenfalls ein übliches Lackkunstharz.

## Claims

1. A process for making transparent anti-corrosion coatings on glass surfaces, in which a lacquer is applied to the surface to be protected and is dried, wherein the lacquer contains:
1) a hetero-poly-condensate of silicic acid which has been made by hydrolysis and poly-condensation of
a) at least one organosilane with the general formula I
RₘSiX₄₋ₘ (I)
in which R signifies alkyl, alkenyl, aryl, aralkyl, alkylaryl, arylalkenyl or alkenylaryl, X represents hydrogen, halogen, hydroxy, alkoxy, acyloxy or the group -NR'₂ (R' = hydrogen and/or alkyl) and **m** has the value 1, 2 or 3,
and at least one of the following components (b), (c) and (d):
b) one or more silicon-functional silanes with the general formula II
SiX₄ (II)
in which X has the above meaning except that not all residues X are hydrogen;
c) one or more oxides, which are soluble in the reaction medium and are of low volatility, of an element of the main groups Ia to Va or the transition groups IIb to Vb of the periodic system, or one or more compounds of these elements forming such an oxide of low volatility;
d) one or more organo-functional silanes with the general formula III
Rₙ(R"Y)ₚSiX₍₄₋ₙ₋ₚ₎ (III)
in which R and X have the above meaning, R" represents alkyls, aryls, alkylaryls, alkenyls or alkenylaryls, wherein these residues can be interrupted by oxygen or sulphur atoms or -NH groups, Y is halogen, or a possibly substituted amino group, amide, aldehyde, alkylcarbonyl, carboxy, hydroxy, mercapto, cyano, alkoxy, alkoxycarbonyl, sulphonic acid, phosphoric acid, acryloxy, methacryloxy, glycidyloxy, epoxy or vinyl group, **n** has the value 0, 1 or 2 and **p** the value 1, 2 or 3 and **n** + **p** has the value 1, 2 or 3;
wherein oligomers of these silanes which are soluble in the reaction medium can be used in the case of the starting components (a) and (d);
2) a squamous or leaf-formed filler,
3) a solvent for the silicic acid hetero-poly-condensate and
4) if desired a normal lacquer synthetic resin.

2. A process according to claim 1, characterized in that the lacquer is sprayed on to the surface to be protected in a plurality of layers and intermediate drying is effected between the individual spray coatings.

3. A process according to claim, characterized in that the lacquer free from filler is applied to the surface to be protected, the filler is spread on or the lacquer layer is brought into contact with a bed of filler, before the lacquer layer dries, the filler adhering to the lacquer layer is pressed in and this process is repeated one or more times if desired.

4. A process according to any of claims 1 to 3, characterized in that a titanium or zirconium ester of the general formula IV
M(OR"')₄ (IV)
is mixed with the lacquer before its application, where M signifies titanium or zirconium and R"' is a straight chain or branched alkyl residue with 1 to 6 carbon atoms.

5. A process according to any of claims 1 to 4, characterized in that the lacquered surface is given one or more top coats of the filler-free lacquer.

6. A process according to any of claims 1 to 5, characterized in that the silicic acid poly-condensate comprises 20 to 95 mol percent of the organosilane (a), 0 to 20 mol percent of the silicon-functional silane (b), 0 to 20 mol percent of the oxide component (c) and 0 to 60 mol percent of the organo-functional silane (d), wherein the total proportion of the components (b), (c) and/or (d) amounts to at least 5 mol percent.

7. A process according to any of claims 1 to 6, characterized in that the filler comprises mica or small leaves of glass (glass flakes).

8. A process according to any of claims 1 to 7, characterized in that the ratio of weights of the resin component (silicic acid hetero-poly-condensate, synthetic lacquer resin) to the solvent is from 1:1 to 1:20.

9. A process according to any of claims 1 to 8, characterized in that the ratio of weights of the resin component (silicic acid hetero-poly-condensate, synthetic lacquer resin) to the filler is from 3:7 to 5:1.

10. A transparent lacquer for carrying out the process according to claim 1, containing:
1) a hetero-poly-condensate of silicic acid which has been made by hydrolysis and poly-condensation of
a) at least one organosilane with the general formula I
RₘSiX₄₋ₘ (I)
in which R signifies alkyl, alkenyl, aryl, aralkyl, alkylaryl, arylalkenyl or alkenylaryl, X represents hydrogen, halogen, hydroxy, alkoxy, acyloxy or the group -NR'₂ (R' = hydrogen and/or alkyl) and m has the value 1, 2 or 3,
and at least one of the following components (b), (c) and (d):
b) one or more silicon-functional silanes with the general formula II
SiX₄ (II)
in which X has the above meaning except that not all residues X are hydrogen;
c) one or more oxides, which are soluble in the reaction medium and are of low volatility, of an element of the main groups Ia to Va or the transition groups IIb to Vb of the periodic system, or one or more compounds of these elements forming such an oxide of low volatility;
d) one or more organo-functional silanes with the general formula III
Rₙ(R"Y)ₚSiX₍₄₋ₙ₋ₚ₎ (III)
in which R and X have the above meaning, R" represents alkyls, aryls, alkylaryls, alkenyls or alkenylaryls, wherein these residues can be interrupted by oxygen or sulphur atoms or -NH groups, Y is halogen, or a possibly substituted amino group, amide, aldehyde, alkylcarbonyl, carboxy, hydroxy, mercapto, cyano, alkoxy, alkoxycarbonyl, sulphonic acid, phosphoric acid, acryloxy, methacryloxy, glycidyloxy, epoxy or vinyl group, **n** has the value 0, 1 or 2 and **p** the value 1, 2 or 3 and **n** + **p** has the value 1, 2 or 3;
wherein oligomers of these silanes which are soluble in the reaction medium can be used in the case of the starting components (a) and (d);
2) a squamous or leaf-formed filler,
3) a solvent for the silicic acid hetero-poly-condensate and
4) if desired a normal lacquer synthetic resin.

## Revendications

1. Procédé de préparation d'enductions anticorrosives transparentes sur des surfaces de verre, dans lequel on applique une laque sur la surface à protéger et on fait sécher, tandis que la laque contient :
1- un hétéropolycondensat d'acide silicique, qui a été produit par hydrolyse et polycondensation de :
a) au moins un organo silane de formule générale I :
RₘSiX₄₋ₘ (I)
dans laquelle :
R représente un alkyle, alkenyle, aryle, aralkyle, alkylaryle, arylalcényle ou alcénylaryle,
X représente un hydrogène, halogène, hydroxy, alcoxy, acyloxy ou le groupe -NR'₂ (R' = hydrogène et/ou alkyle) et m a la valeur 1, 2 ou 3
et au moins un des composants (b), (c) et (d) :
b) un ou plusieurs silanes fonctionnels du silicium de formule générale II :
SiX₄ (II)
dans laquelle :
X a la configuration précédente, mais tous les radicaux X ne sont pas de l'hydrogène,
c) un ou plusieurs oxydes difficilement volatils, solubles dans le milieu réactionnel d'un élément des groupes principaux Ia à Va ou des sous-groupes IIb à Vb du système périodique ou bien un ou plusieurs composés de ces éléments formant un oxyde difficilement volatil de ce type.
d) un ou plusieurs silanes organo fonctionnels de la formule générale III :
Rₙ(R"Y)ₚSiX₍₄₋ₙ₋ₚ₎ (III)
dans laquelle :
R et X ont la signification précédente, R" représente un alkylène, arylène, alkylenarylène, alcénylène ou alcénylenarylène, tandis que ces radicaux peuvent être interrompus par des atomes d'oxygène ou de soufre ou des groupes -NH, Y est un halogène ou un groupe amino, un groupe amide, aldéhyde, alkylcarbonyle, carboxy, hydroxy, mercapto, cyano, alcoxy, alcoxycarbonyle, un groupe d'acide sulfonique, d'acide phosphorique, un groupe acryloxy, un groupe méthacryloxy, un groupe glycidyloxy, un groupe époxy ou vinyle, n a la valeur 0,1 ou 2 et p la valeur 1, 2 ou: 3, tandis que n + p a la valeur 1, 2 ou 3.
dans le cas des composants de départ (a) et (d) on peut utiliser dans le milieu réactionnel des oligomères solubles de ces silanes :
2- une charge en forme d'écaille ou de lamelle et
3- un solvant pour l'hétéropolycondensat d'acide silicique et
4- éventuellement une résine synthétique de laque.

2. Procédé selon la revendication 1,
caractérisé en ce que
on pulvérise la laque en plusieurs couches sur la surface à protéger et on réalise entre les enductions individuelles par pulvérisation un séchage intermédiaire.

3. Procédé selon la revendication 1,
caractérisé en ce que
on applique la laque dépourvue de la charge sur la surface à protéger, on répartit avant le début du séchage de la couche de laque la charge ou on amène en contact la couche de laque avec un lit de charge, on comprime la charge adhérente à la couche de laque et on répète ce procédé éventuellement une ou plusieurs fois.

4. Procédé selon une des revendications 1 à 3,
caractérisé en ce que
on ajoute et mélange à la laque avant l'application un ester de titane ou de zirconium de la formule générale IV :
M(OR"')₄ (IV)
dans laquelle M représente du titane ou du zirconium et R"' est un radical alkyle à chaîne droite ou ramifié ayant de 1 à 6 atomes de carbone.

5. Procédé selon une des revendications 1 à 4,
caractérisé en ce que
on prévoit la surface laquée avec une ou plusieurs couches d'enduction en laque dépourvue de charge.

6. Procédé selon une des revendications 1 à 5,
caractérisé en ce que
l'hétéropolycondensat d'acide silicique comprend de 20 à 95 pour-cent molaire de l'organosilane (a), de 0 à 20 pourcent molaire du silane (b) fonctionnel du silicium, de 0 à 20 pour-cent molaire du composant d'oxyde (c) et de 0 à 60 pour-cent molaire du silane (d) organofonctionnel, tandis que la proportion totale des composants (b), (c) et/ou (d) se monte à au moins 5 pour-cent molaire.

7. Procédé selon une des revendications 1 à 6,
caractérisé en ce que
la charge comprend du mica ou des lamelles de verre (écailles de verre).

8. Procédé selon une des revendications 1 à 7,
caractérisé en ce que
le rapport pondéral des composants de résine (hétéropolycondensat d'acide silicique, résine synthétique de laque) par rapport au solvant se monte à 1:1 jusqu'à 1:20.

9. Procédé selon une des revendications 1 à 8,
caractérisé en ce que
le rapport pondéral des composants de résine (hétéropolycondensat d'acide silicique, résine artificielle de laque) par rapport à la charge se monte à 3:7 jusqu'à 5:1.

10. Laque transparente pour la réalisation du procédé selon la revendication 1, contenant :
1- un hétéropolycondensat d'acide silicique, qui a été produit par hydrolyse et polycondensation de :
a) au moins un organo silane de formule générale I :
RₘSiX₄₋ₘ (I)
dans laquelle :
R représente un alkyle, alkenyle, aryle, aralkyle, alkylaryle, arylalcényle ou alcénylaryle,
X représente un hydrogène, halogène, hydroxy, alcoxy, acyloxy ou le groupe -NR'₂ (R' = hydrogène et/ou alkyle) et m a la valeur 1, 2 ou 3
et au moins un des composants (b), (c) et (d) :
b) un ou plusieurs silanes fonctionnels du silicium de formule générale II
SiX₄ (II)
dans laquelle :
X a la configuration précédente, mais tous les radicaux X ne sont pas de l'hydrogène,
c) un ou plusieurs oxydes difficilement volatils, solubles dans le milieu réactionnel d'un élément des groupes principaux Ia à Va ou des sous-groupes IIb à Vb du système périodique ou bien un ou plusieurs composés de ces éléments formant un oxyde difficilement volatil de ce type.
d) un ou plusieurs silanes organo fonctionnels de la formule générale III :
Rₙ(R"Y)ₚSiX₍₄₋ₙ₋ₚ₎ (III)
dans laquelle :
R et X ont la signification précédente, R" représente un alkylène, arylène, alkylenarylène, alcénylène ou alcénylenarylène, tandis que ces radicaux peuvent être interrompus par des atomes d'oxygène ou de soufre ou des groupes -NH, Y est un halogène ou un groupe amino, un groupe amide, aldéhyde, alkylcarbonyle, carboxy, hydroxy, mercapto, cyano, alcoxy, alcoxycarbonyle, un groupe d'acide sulfonique, d'acide phosphorique, un groupe acryloxy, un groupe méthacryloxy, un groupe glycidyloxy, un groupe époxy ou vinyle, n a la valeur 0,1 ou 2 et p la valeur 1, 2 ou 3, tandis que n + p a la valeur 1, 2 ou 3,
dans le cas des composants de départ (a) et (d) on peut' utiliser dans le milieu réactionnel des oligomères solubles de ces silanes :
2- une charge en forme d'écaille ou de lamelle et
3- un solvant pour l'hétéropolycondensat d'acide silicique et
4- éventuellement une résine synthétique de laque.
